# EUROPÄISCHE PATENTANMELDUNG

(11) **EP 0 834 657 A2**
(43) Veröffentlichungstag der Anmeldung: **08.04.1998**
(21) Anmeldenummer: 97114053.8
(22) Anmeldetag: 14.08.1997
(51) Int. Cl.: F16B 7/04

(54) **Rahmenkonstruktion mit Hohlprofilen aus Leichtmetall**

(30) Priorität: 01.10.1996 DE 29617093 U
(71) Anmelder: Erbslöh Aktiengesellschaft, 42553 Velbert (DE)
(72) Erfinder: Grosch, Karl, 42111 Wuppertal (DE)
(74) Vertreter: Ernicke, Hans-Dieter, Dipl.-Ing.

(57) **Zusammenfassung**

Die Erfindung befaßt sich mit der Weiterentwicklung von Rahmenkonstruktionen mit Hohlprofilen (1,2) aus Leichtmetall, wie sie durch das DE-GM 9 319 206 bekannt sind.
Um beim Verbinden von Hohlprofilen (1,2) untereinander oder mit Eckverbindungswürfeln (6) bzw. mit Platten (22) Fertigungsungenauigkeiten auszugleichen, werden zwischen den Stoßflächen (8,9) der Hohlprofile (1,2) oder den Stoßflächen (8,35) der Hohlprofile (1,2) und von Platten (22) oder dergleichen Schattenfugen (4) vorgesehen, die von Beschlägen bzw. Verbindungselementen (12,24) gebildet werden.

Dadurch wird der Vorteil erzielt, daß nicht genau parallel zueinander liegende Stoßflächen praktisch unerkannt bleiben.

## Beschreibung

Die Erfindung bezieht sich auf eine Rahmenkonstruktion mit Hohlprofilen aus Leichtmetall entsprechend den im Oberbegriff des Schutzanspruches 1 aufgeführten Merkmalen.

Hohlprofile für solche Rahmenkonstruktionen sind aus dem DE-GM 9 319 206 bekannt. Sie weisen einen prismatischen, insbesondere quadratischen Querschnitt auf und besitzen im Zentrum einen durchgehenden Schraubkanal zum Eindrehen selbstschneidender Schrauben oder Gewindehülsen. Die Außenwände sind in Längsrichtung mit Wandschwächungen versehen, zwischen denen Wandabschnitte partiell oder durchgehend sich befinden und abgetrennt werden können. Die Außenwände sind mit dem Schraubkanal durch diagonale Stege verbunden.

Um solche Hohlprofile zu einer Rahmenkonstruktion zu verbinden, werden Eckverbindungswürfel vorgesehen, welche die Außenkontur der Hohlprofile fortsetzen und schraubtechnisch mit den Hohlprofilen verbunden sind. Solche Eckverbindungswürfel sind aus der älteren DE-GM-A 296 03 402.9 ersichtlich.

Wenn man nun solche Hohlprofile über Eckverbindungswürfel miteinander verbindet, kann das Problem entstehen, daß die aneinander liegenden Stoßflächen keinen rechten Winkel der verbundenen Hohlprofile bilden, wenn nämlich der Schnitt nicht genau rechtwinklig zur Längsachse der Hohlprofile erfolgt oder wenn die Stirnfläche des Eckverbindungswürfels oder die Seitenfläche eines anderen Hohlprofiles nicht korrekt hergestellt sind.

Das gleiche Problem ergibt sich dann, wenn mit solchen Rahmenkonstruktionen Platten, Wände oder dergleichen Elemente verbunden werden sollen.

Der Erfindung liegt daher die Aufgabe zugrunde, Stoßverbindungen von Hohlprofilen untereinander oder in Verbindung mit Eckverbindungswürfeln oder in Verbindung mit Platten oder dergleichen so zu gestalten, daß geringe Abweichungen der Stoßflächen von der idealen Lage nicht sonderlich sichtbar werden.

Die Lösung der gestellten Aufgabe ergibt sich aus den kennzeichnenden Merkmalen des Schutzanspruches 1. Danach werden zwischen den Stoßflächen Schattenfugen gebildet, welche durch Beschläge bzw. Verbindungselemente entstehen. An diesen Schattenfugen erkennt man nicht ohne weiteres, ob die Stoßflächen der Profile oder Platten genau paralell zueinander liegen.

Wenn es darum geht, Schattenfugen zwischen aneinander stoßenden Hohlprofilen oder/und Eckverbindungswürfeln zu erzeugen, dann empfiehlt es sich, Maßnahmen entsprechend den Ansprüchen 2 bis 4 zu ergreifen. In diesem Fall wird die Schattenfuge durch eine gelochte Distanzscheibe gebildet, welche auf ein Außengewinde eines vorstehenden Gewindehülsenabschnittes aufgeschraubt wird. Man kann auch äquivalent hierzu eine Distanzscheibe verwenden, die eine in den Schraubkanal des einzelnen Hohlprofiles einzuschraubende Schraube lose umgibt.

Wenn es aber darum geht, eine Platte oder dergleichen mit einem die Rahmenkonstruktion bildenden Hohlprofil zu verbinden, dann reicht die Distanzscheibe nicht aus, sondern es empfiehlt sich, die Merkmale der Ansprüche 5-12 einzeln oder in Kombination zueinander zu verwenden.

In diesem Zusammenhang hat sich besonders bewährt, in den Seitenrand einer Platte ein Beschlagteil einzusetzen, das mit einem im Querschnitt hakenförmig ausgebildeten Steg in eine Nut der Platte eingreift und mit einem außenliegenden Führungssteg in dem Schlitz der Außenwand des Hohlprofiles geführt ist. Um die Schattenfuge zu bilden, wird ein zweiter zurückversetzter Steg verwendet, der vorzugsweise in einer Stufe des Randes der Platte geführt und dort abgestützt ist und mit freien Stegen an der Stoßfläche des Hohlprofiles anliegt. Diese freien Stege bestimmen die Breite der Schattenfuge, wobei es sich empfiehlt, den Beschlag in seiner Außenfläche dunkel, insbesondere schwarz, zu gestalten.

Eine besonders vorteilhafte Ausgestaltung dieser Lehre besteht darin, daß die freien Schenkel des zurückversetzten Führungssteges abschnittsweise unterbrochen und die dadurch gebildeten Lücken zum Einhängen von Tablarhaken bestimmt sind. Man kann daher, wenn das Hohlprofil und das Beschlagteil aufrecht angeordnet sind, diese Tablarhaken in gewünschter Höhe durch die Schattenfuge in die vorgegebene Aussparung des Führungssteges einsetzen und damit die Voraussetzung bilden, zwischen den aufrechten Wänden der Rahmenkonstruktion quer sich erstreckende Fächer abzustützen.

Einzelheiten der Erfindung ergeben sich aus der Zeichnung. In ihr ist die Erfindung schematisch und beispielsweise dargestellt. Es zeigen:
- Figur 1:: eine Draufsicht auf zwei nach Art eines T-Anschlusses miteinander verbundenen Hohlprofilen,
- Figur 2:: eine Draufsicht auf eine Eckverbindung,
- Figur 3:: einen Querschnitt durch ein Hohlprofil,
- Figur 4:: einen Teilvertikalschnitt in vergrößerter Ausführung durch den Stirnbereich eines Hohlprofiles mit eingeschraubter Gewindehülse,
- Figur 5:: einen Vertikalschnitt durch die Stoßverbindung eines Würfels mit einem Hohlprofil,
- Figur 6:: einen Horizontalschnitt durch eine andere Variante eines Hohlprofiles mit einer über ein Beschlagteil verbinbaren Platte und
- Figur 7:: eine Vorderansicht des Hohlprofiles gemäß Pfeil A in Figur 6.

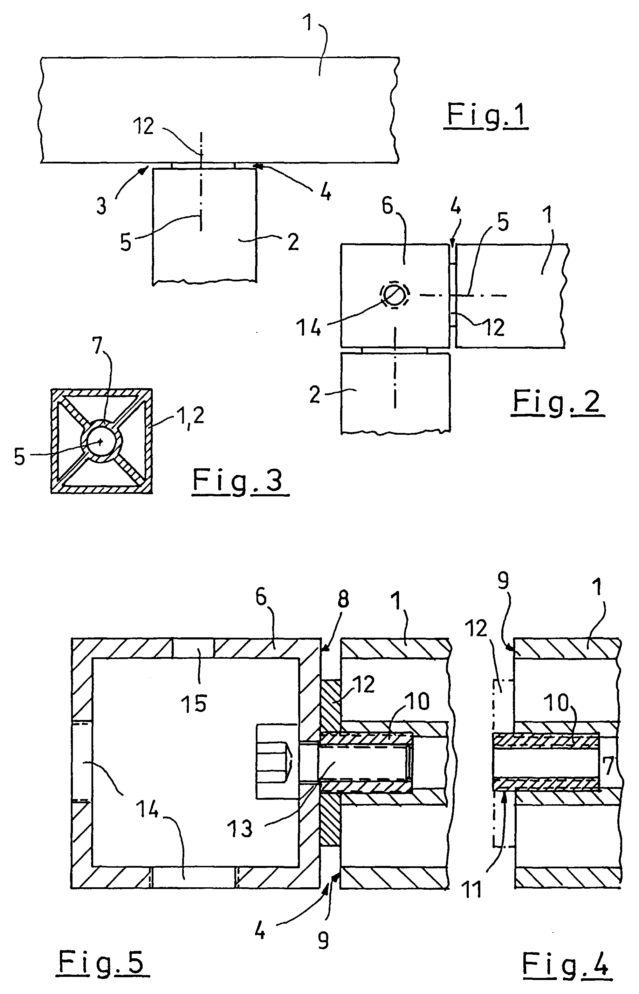

Die in den Figuren 1 und 2 in Draufsicht dargestellten Hohlprofile (1,2) weisen bevorzugt einen Querschnitt entsprechend Figur 3 auf. Danach ist im Kernbereich der Hohlprofile (1,2) ein durchlaufender Schraubkanal (7) vorhanden, der durch eine Hülse gebildet wird, die über diagonale Stege mit den Außenwandungen der Hohlprofile (1,2) verbunden ist.

Das Beispiel der Figur 1 zeigt eine T-förmige Stoßverbindung zwischen den beiden Hohlprofilen (1,2), wobei die Stoßstelle (3) durch eine Schattenfuge (4) gebildet wird. Mit (5) ist die Schraubachse symbolisch dargestellt. Danach wird eine Schraube quer durch das oben liegende Hohlprofil (1) hindurchgeführt und in den Schraubkanal(7) des anderen Hohlprofiles (2) eingedreht.

Die Schattenfuge (4) wird durch eine Distanzscheibe (12) gebildet, deren Umfang kleiner als der Umfang des anzuschließenden Profiles (2) ist. Bevorzugt wird die Distanzscheibe (12) in dunkler, insbesondere schwarzer Farbe verwendet, so daß die Schattenfuge (4) tatsächlich nicht erkennen läßt, was im Innenbereich der Schattenfuge (4) angeordnet ist.

Die Eckverbindung von zwei Hohlprofilen (1,2) gemäß Figur 2 sieht einen Eckverbindungswürfel (6) vor, dessen Konturen diejenigen der anzuschließenden Hohlprofile (1,2) fortsetzt.

In den Seitenwandungen des Eckverbindungswürfels (6) sind einander gegenüberliegende Durchgangsbohrungen (14,15) unterschiedlich großen Durchmessers vorhanden, wie dies aus Figur 5 deutlich hervorgeht. Die große Durchgangsbohrung (14) ist dazu bestimmt, den Kopf einer Schraube (13) hindurchführen zu können. Die kleinere Durchgangsbohrung (15) ist für den Durchtritt des Schraubenschaftes bestimmt.

Der Innenquerschnitt des Eckverbindungswürfels (6) kann beliebig gestaltet werden und dem Stand der Technik entsprechen.

Aus Figur 4 erkennt man zunächst, daß in den Schraubkanal (7) eine Gewindehülse (10) eingedreht ist, die einen geringfügig vorstehenden Abschnitt (11) aufweist. Die Gewindehülse (10) hat Außengewinde und Innengewinde. Das Innengewinde ist dazu bestimmt, die in Figur 5 dargestellte Schraube (13) aufzunehmen. Das Außengewinde ist zum Einschrauben der Gewindehülse (10) in die Wandung des Schraubkanals (7) bestimmt.

Die Höhe des vorstehenden Abschnittes (11) entspricht der Dicke einer auf diesem Abschnitt (11) aufschraubbaren Distanzscheibe (12), deren zentrischen Loch zum Außendurchmesser der Gewindehülse (10) passend ist. Der Außendurchmesser der Distanzscheibe (12) kann dabei so groß bemessen werden, daß er die offenen Stellen der Stoßfläche (9) abdeckt, aber gegenüber der Außenfläche der Hohlprofile (1,2) bzw. des Würfels (6) zurückversetzt ist.

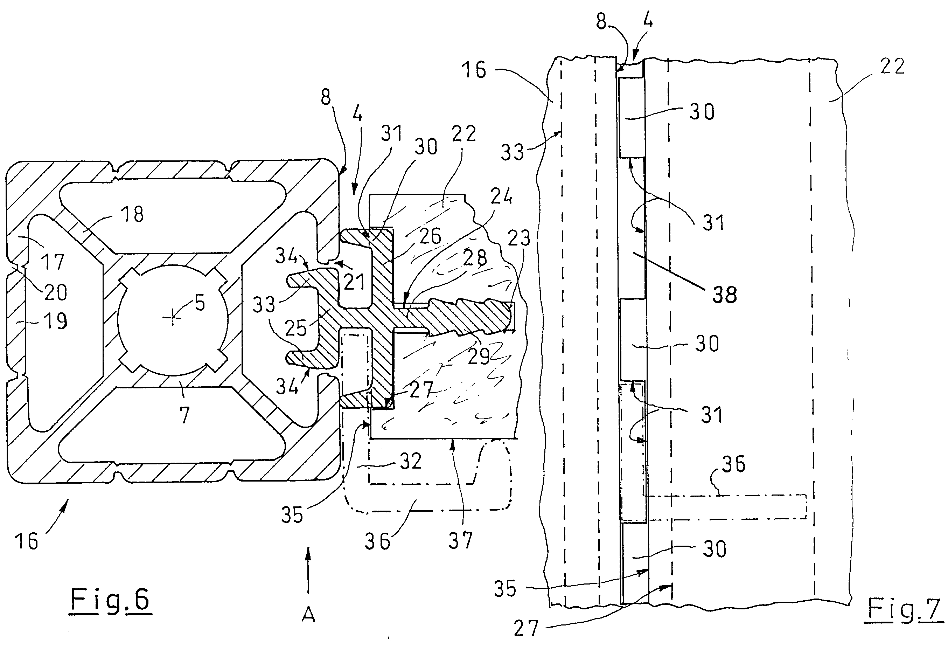

In den Figuren 6 und 7 ist ein Ausführungsbeispiel gezeigt, welches die Verbindung eines Hohlprofiles (16) mit einer Platte (22) im Querschnitt darstellt. Dieser Querschnitt ist so zu verstehen, daß das Hohlprofil (16) sich vertikal erstreckt und demzufolge die Platte (22) eine vertikale Frontplatte einer Rahmenkonstruktion bildet.

Das Hohlprofil (16) weist eine gegenüber dem Stand der Technik geringfügig geänderte, verbesserte Querschnittsform auf. Danach bilden die Außenwände (17) den Umfang eines im Querschnitt quadratischen Hohlprofiles. Dementsprechend ist der Querschnitt des Schraubkanales (7) außenseitig ebenfalls quadratisch und innenseitig im Querschnitt kreisförmig gestaltet. Dieser Schraubkanal (7) ist mit den Außenwänden (17) durch diagonale Stege (18) verbunden. In den Außenwänden (17) befinden sich längs sich erstreckende Wandschwächungen (20), zwischen denen abtrennbare Wandabschnitte (19) gebildet werden. Wenn ein solcher Wandabschnitt (19) partiell oder längs durchlaufend abgetrennt wird, ergibt sich an dessen Stelle ein längslaufender Schlitz (21), der für konstruktive Maßnahmen benötigt wird.

Im Beispiel der Figur 6 weist der Plattenrand (35) eine Nut (23) auf, in welche ein Haltesteg (28) eines Beschlagteils (24) eingesetzt wird. Dieser Kaltesteg (28) weißt im Querschnitt vorstehende Haken (29) auf, welche harpunenartig ein Lösen des Haltesteges (28) aus der Nut (23) verhindern sollen.

Der Plattenrand (35) weist außerdem eine zurückversetzte Stufe(27) auf, in welche ein zurückversetzter Steg (26) des Beschlagteiles (24) eingreift. Dieser Führungssteg (26) ist im Querschnitt u-förmig gestaltet. Seine freien Schenkel (30) ragen über den Plattenrand (35) hinaus und stoßen an der Stoßfläche (8) des Hohlprofile (16) an. Dadurch wird eine Schattenfuge (4) gebildet, die sich zwischen der Stoßfläche (8) des Hohlprofiles (16) und der Stoßfläche (35) ( Plattenrand) der Platte (22) erstreckt.

Das Beschlagteil (24) weist außerdem einen äußeren Führungssteg (25) auf der beim Ausführungsbeispiel ebenfalls u-förmig im Querschnitt gestaltet ist. Die freien Schenkel (33) dieses äußeren Führungssteges (25) durchgreifen den Schlitz (21) des Hohlprofiles (16) und sind darin geführt. Um das Eingreifen des äußeren Führungssteges (25) in den Schlitz (21) zu erleichtern, sind die freien Schenkel (33) mit einer sich in Richtung zum Hohlprofil (16)verjüngenden Außenkontur (34) versehen.

Es empfiehlt sich generell, die von außen sichtbaren Flächen des Beschlagteiles (24) dunkel, insbesondere schwarz, zu gestalten, damit die Konturen innerhalb der Schattenfuge (4) nicht erkennbar sind.

Wenn man davon ausgeht, daß das Hohlprofil (16) und die Platte (22) gemäß Figur 6 sich in vertikaler Richtung erstrecken, dann ergibt sich möglicherweise die Notwendigkeit, bei einer solchen Rahmenkonstruktion Vorkehrungen zum Einsetzen von Fachbrettern oder dergleichen zu treffen.

Zu diesem Zweck weisen die freien Schenkel (30) des zurückversetzen Führungsstege (26) stellenweise Durchbrechungen (31) auf, wie sie auch in der partiellen Draufsicht der Figur 7 erkennbar sind. In diese Durchbrechungen (31) lassen sich schmale Stege von Tablarhaken (32) einsetzen, welche in die Schattenfuge (4) eingreifen und mit einem vorkragenden Teil (36) über die Außenwandfläche (37) der Platte (22) ragen. Dieser vorkragende Teil (36) dient als Auflage für eine Fachplatte oder dergleichen. Da der freie Schenkel (30) des zurückversetzten Führungssteges (26) mehrere Durchbrechungen (31) aufweist, kann damit der Tablarhaken (32) in gewünschter Höhe eingestellt werden. An den stellenweise vorgesehenen Durchbrechungen (31) wird der Mittelsteg (38) des Beschlagteils (24) sichtbar. Dieser Mittelsteg (38) ist ebenfalls schwarz gestaltet.

### Bezugszeichenliste

- 1: Hohlprofil
- 2: Hohlprofil
- 3: Stoßstelle
- 4: Schattenfuge
- 5: Schraubachse
- 6: Eckverbindungswürfel
- 7: Schraubkanal
- 8: Stoßfläche
- 9: Stoßfläche
- 10: Gewindehülse
- 11: vorstehender Abschnitt
- 12: Distanzscheibe
- 13: Schraube
- 14: Durchgangsbohrung
- 15: Durchgangsbohrung
- 16: Hohlprofil
- 17: Außenwand
- 18: Steg
- 19: Wandabschnitt
- 20: Wandschwächung
- 21: Schlitz
- 22: Platte
- 23: Nut
- 24: Beschlagteil
- 25: äußerer Führungssteg
- 26: zurückversetzter Führungssteg
- 27: Stufe
- 28: Haltesteg
- 29: Haken
- 30: freier Schenkel des zurückversetzten Führungssteges
- 31: Durchbrechung
- 32: Tablarhaken
- 33: freier Schenkel des außenliegenden Führungssteges
- 34: verjüngende Außenkontur
- 35: Stoßfläche, Plattenrand
- 36: vorkragender Teil
- 37: Fläche der Platte
- 38: Mittelsteg

## Patentansprüche

1. Rahmenkonstruktion mit Hohlprofilen (1,2,16) aus Leichtmetall, die einen durchgehenden zentrischen Schraubkanal (7) zum Eindrehen selbstschneidender Schrauben oder Gewindehülsen (10) sowie in den Außenwänden (17) in Längsrichtung partielle oder durchgehende Schlitze (21) aufweisen, welche durch Entfernen des entsprechenden Wandabschnittes (19) gebildet werden können, dadurch **gekennzeichnet,** daß
zwischen den Stoßflächen (8,9) der Hohlprofile (1,2) untereinander oder/und zwischen den Stoßflächen (8,35) von Hohlprofilen (16) und den mit ihnen verbundenen Platten oder dergleichen jeweils eine Schattenfuge (4) vorgesehen ist, die von Beschlägen bzw. Verbindungselementen (12,24) gebildet wird.

2. Rahmenkonstruktion nach Anspruch 1, dadurch **gekennzeichnet,** daß
zur Erzeugung einer Schattenfuge (4) zwischen den Stoßflächen (8,9) die Gewindehülse (10) über die Stoßfläche (9) des zugeordneten Hohlprofiles (7) vorsteht und daß eine der Breite der Schattenfuge (4) entsprechend dicke, gelochte Distanzscheibe (12) auf das Außengewinde des vorstehenden Gewindehülsenabschnittes (11) aufgeschraubt ist.

3. Rahmenkonstruktion nach Anspruch 2, dadurch **gekennzeichnet,** daß
der Außenumfang der Distanzscheibe (12) gegenüber den Außenflächen des Hohlprofiles (1,2) zurückversetzt ist.

4. Rahmenkonstruktion nach Anspruch 2 oder 3, dadurch **gekennzeichnet,** daß
die Distanzscheibe (12) eine dunkle, insbesondere schwarze, Farbe aufweist.

5. Rahmenkonstruktion nach Anspruch 1, dadurch **gekennzeichnet,** daß
zur Verbindung eines Hohlprofiles (16) mit einer Platte (22) eine in eine Nut (23) der Platte (22) einsetzbares Beschlagteil (24) vorgesehen ist, das zwei voneinander distanzierte und sich parallel zum Plattenrand (35) erstreckende Führungssteg (25,26) aufweist, von denen der außenliegenden Führungssteg (25) in den Schlitz (21) der Außenwand (17) des Hohlprofiles (16) eingreift und der zurückversetzte Führungssteg (26) als ein die Schattenfuge (4) bildendes Anschlagelement ausgebildet ist.

6. Rahmenkonstruktion nach Anspruch 5, dadurch **gekennzeichnet,** daß
der einzelne Führungssteg (25,26) im Querschnitt als ein zum Rahmenprofil (16) sich öffnendes U-Profil ausgebildet ist.

7. Rahmenkonstruktion nach Anspruch 5 oder 6, dadurch **gekennzeichnet,** daß
der zurückversetzte Führungssteg (26) in einer zurückversetzten Stufe (27) des Plattenrandes (35) geführt ist.

8. Rahmenkonstruktion nach Anspruch 5 oder einem der folgenden, dadurch **gekennzeichnet,** daß
das Beschlagteil (24) einen sich quer zu den Führungsstegen (25,26) erstreckenden, im Querschnitt hakenförmig (29) ausgebildeten und in die Nut (23) der Platte (22) einsetzbaren Haltesteg (28) aufweist.

9. Rahmenkonstruktion nach Anspruch 5 oder einem der folgenden, dadurch **gekennzeichnet,** daß
die freien Schenkel (30) des zurückversetzten Führungssteges (26) abschnittsweise unterbrochen (31) und die dadurch gebildeten Lücken zum Einhängen von Tablarhaken (32) bestimmt sind.

10. Rahmenkonstruktion nach Anspruch 5 oder einem der folgenden, dadurch **gekennzeichnet,** daß
die freien Schenkel (33) des außenliegenden Führungssteges (25) eine in Richtung zum Hohlprofil (16) sich verjüngende Außenkontur (34) aufweisen.

11. Rahmenkonstruktion nach Anspruch 5 oder einem der folgenden, dadurch **gekennzeichnet,** daß
das Beschlagteil (24) eine dunkle, insbesondere schwarze Farbe aufweist.

12. Rahmenkonstruktion nach Anspruch 1 oder einem der folgenden, dadurch **gekennzeichnet,** daß
im Kreuzungsbereich der Hohlprofile (1,2) die Distanzscheiben (12) und die zurückversetzten Führungsstege (26) der Beschlagteile aneinanderstoßen.
